(19) Europäisches Patentamt
European Patent Office
Office européen des brevets

(11) **EP 3 060 903 B1**

(12) # EUROPÄISCHE PATENTSCHRIFT

(45) Veröffentlichungstag und Bekanntmachung des Hinweises auf die Patenterteilung:
**15.05.2024 Patentblatt 2024/20**

(21) Anmeldenummer: **14789792.0**

(22) Anmeldetag: **21.10.2014**

(51) Internationale Patentklassifikation (IPC):
**G01N 23/04** *(2018.01)*

(52) Gemeinsame Patentklassifikation (CPC):
**G01N 23/04; G01N 23/044; G01N 2223/309; G01N 2223/3303; G01N 2223/3306; G01N 2223/3308**

(86) Internationale Anmeldenummer:
**PCT/EP2014/002841**

(87) Internationale Veröffentlichungsnummer:
**WO 2015/058855 (30.04.2015 Gazette 2015/17)**

(54) **VERFAHREN ZUM ROTIEREN EINES PRÜFOBJEKTS MITTELS EINES RÖNTGENPRÜFSYSTEMS**

METHOD FOR ROTATING A TEST OBJECT BY MEANS OF AN X-RAY INSPECTION SYSTEM

PROCÉDÉ DE ROTATION D'UN OBJET À CONTRÔLER AU MOYEN D'UN SYSTÈME DE CONTRÔLE À RAYONS X

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.10.2013 DE 102013017462**

(43) Veröffentlichungstag der Anmeldung:
**31.08.2016 Patentblatt 2016/35**

(73) Patentinhaber: **Comet Xylon GmbH 22419 Hamburg (DE)**

(72) Erfinder:
- **MECKE, Andreas 22885 Barsbüttel (DE)**
- **SPALDING, Jan 25462 Rellingen (DE)**
- **KLEIN, Axel 22175 Hamburg (DE)**

(74) Vertreter: **DTS Patent- und Rechtsanwälte Schnekenbühl und Partner mbB Brienner Straße 1 80333 München (DE)**

(56) Entgegenhaltungen:
**AT-B- 363 262     GB-A- 2 274 964**

- **David Haas: "Röntgenbildgebung und Analyse", , 2008, XP055160149, Gefunden im Internet: URL:http://www.alexanderrack.eu/papers/haas2008.pdf [gefunden am 2015-01-06]**

EP 3 060 903 B1

**Beschreibung**

Die Erfindung befasst sich mit einem Verfahren zur Rotation eines Prüfobjekts in einem Röntgenprüfsystem mit einer Röntgenquelle, einem Detektor und einem dazwischen angeordneten Rotationstisch, an dem ein Prüfobjekt festlegbar.

Es ist bekannt, dass bei Röntgenprüfsystemen das Prüfobjekt mittels realen (physischen) Achsen zwischen den bildgebenden Elementen Röntgenquelle und Detektor bewegt wird. Dabei ist es auch durchaus üblich, sowohl die Röntgenquelle als auch den Detektor zu bewegen, um den gewünschten Bildausschnitt zu erhalten. Problematisch wird es bei den bekannten Lösungsansätzen, wenn der zu untersuchende Bereich eines Prüfobjektes unter einem bestimmten Durchstrahlungswinkel betrachtet werden soll, sich dieser Bereich aber nicht im Zentrum oder zumindest im erforderlichen Bereich der notwendigen Kipp- oder Rotationsachse befindet.

Hierfür gibt es zwei Lösungsansätze:

- Umspannen des Prüfobjektes, d.h. der interessierende Bereich wird manuell ins Zentrum der Rotationsachse verlagert;
- Hinzufügen weiterer Achsen, um den Freiheitgrad in den entsprechen Richtungen zu vergrößern.

Diese Vorgehensweisen haben aber entscheidende Nachteile, wie beispielsweise erhöhter Zeitaufwand, Erhöhung der Achskomplexität und Verringerung des Prüfvolumens bei gleichbleibendem Bauraum.

Die oben genannte Manipulation und die damit einhergehende Problematik der winkelabhängigen Manipulation betrifft alle Röntgensysteme sowohl für DR (Digitales Röntgen), CT (Computer Tomographie) als auch Laminographie. Die Problematik verschärft sich mit steigernder Anforderung an die Auflösung. So werden beispielsweise bei einem sehr hochauflösenden CT-System auf der entscheidenden Rotationsachse zusätzliche XY-Positionstische eingesetzt, um das Prüfobjekt ins Zentrum der für CT qualitätsbestimmenden Rotationsachse zu bringen.

Aus der AT 363 262 ist es bekannt, mittels eines ortsauflösenden Spektrometersystems eine Prüfung eines Prüfobjekts durchzuführen, bei der das Prüfobjekt rotiert wird und dieses gleichzeitig einer translatorischen Bewegung unterzogen wird. Ein ähnliches Verfahren ist aus der GB 2 274 964 A bekannt, bei dem die Untersuchung des Prüfobjekts mittels CT-Röntgentechnologie durchgeführt wird.

Der vorliegenden Erfindung liegt die Aufgabe zugrunde, Verfahren vorzustellen, welche einen maximalen Freiheitsgrad bei geringem Bauraum und vor allem einer geringeren Benutzerinteraktion erfordern.

Die Aufgabe wird auch durch ein Verfahren mit den Merkmalen des Patentanspruchs 1 gelöst. Die in Patentanspruch 1 aufgeführten Teile und deren Bewegungsmöglichkeiten ermöglichen eine einfache Durchführung des erfindungsgemäßen Verfahrens. Dadurch, dass der Rotationstisch auf einem XY-Positionstisch befestigt ist, ist es möglich, mit der X-Achse und der Y-Achse kombiniert zu verfahren, so dass sich der Rotationstisch auf einer Kreisbahn bewegt. Um eine virtuelle Rotationsachse zu realisieren, ist es erforderlich, dass der Rotationswinkel des Rotationstisches im definierten Verhältnis zu den X- und Y-Achsen positioniert bzw. bewegt wird. Hierzu wird die Rotationsachse als Master definiert und die beiden Achsen X und Y entsprechend des Drehwinkels der Rotationsachse positioniert, wie es in den beiden Beziehungen angegeben ist.

Die Aufgabe wird ebenso durch ein Verfahren mit den Merkmalen des Patentanspruchs 2 gelöst. Der Unterschied zu dem gerade beschriebenen Verfahren gemäß Patentanspruch 1 besteht nur darin, dass anstatt das Prüfobjekt zu bewegen, die bildgebenden Elemente Röntgenquelle und Detektor bewegt werden. Die Beziehungen entsprechen denen bei der kombinierten Bewegung des Prüfobjekts mittels Rotationstisch und Positionstisch.

Eine vorteilhafte Weiterbildung der Erfindung sieht vor, dass die Röntgenquelle in Verbindung mit dem Detektor um den Rotationstisch drehbar ist und/oder parallel zur Z-Achse bewegbar ist und/oder um eine parallel zur XY-Ebene, insbesondere parallel zur X-Achse, verlaufende Kippachse kippbar ist. Dadurch kann alternativ oder zusätzlich zur Bewegung des Prüfobjekts auch das bildgebende System bewegt werden, so dass die Flexibilität der Prüfung erhöht wird.

Eine weitere vorteilhafte Weiterbildung der Erfindung sieht vor, dass der Rotationstisch entlang der Z-Achse bewegbar ist. Dadurch kann auch eine in der Höhe variable Untersuchung des Prüfobjekts vorgenommen werden.

Eine weitere vorteilhafte Weiterbildung der Erfindung sieht vor, dass der Rotationstisch um eine parallel zur XY-Ebene, insbesondere parallel zur X-Achse, verlaufende Kippachse kippbar ist. Dadurch kann eine möglichst günstige Trajektorie der Röntgenstrahlung durch das Prüfobjekt gewählt werden.

Eine vorteilhafte Weiterbildung der Erfindung sieht vor, dass vor der Durchführung der beschriebenen Bewegungen der Rotationstisch in Z-Richtung bewegt wird und um eine parallel zur X-Richtung verlaufende Kippachse gekippt wird, so dass ein innerhalb des Prüfobjekts liegender interessierender Bereich vor und nach der beschriebenen Kipp- und Translationsbewegung an derselben Stelle im Koordinatensystem liegt. Dadurch besteht die Möglichkeit, bei einem Prüfobjekt an einem beliebigen Punkt innerhalb des Prüfobjekts um eine beliebig ausgerichtete Achse die Prüfung des Prüfobjekts vorzunehmen. Der Benutzer kann somit individuell entscheiden, welche Parameter er wünscht und dabei das bestmögliche Ergebnis erzielen.

Weitere Vorteile und Einzelheiten der Erfindung werden anhand der in den Figuren dargestellten Ausführungsbeispiele erläutert. Es zeigen:

Figur 1    eine schematische Darstellung eines Verfahrens gemäß dem Stand der Technik,

Figur 2    eine vereinfachte Darstellung eines erfindungsgemäßen Röntgenprüfsystem,

Figur 3    eine schematische Darstellung zu einer virtuellen Drehachse,

Figur 4    eine schematische Darstellung eines Verfahrens mit variablem Kippwinkel und

Figur 5    eine schematische Darstellung eines Verfahrens um einen festlegbaren Punkt herum.

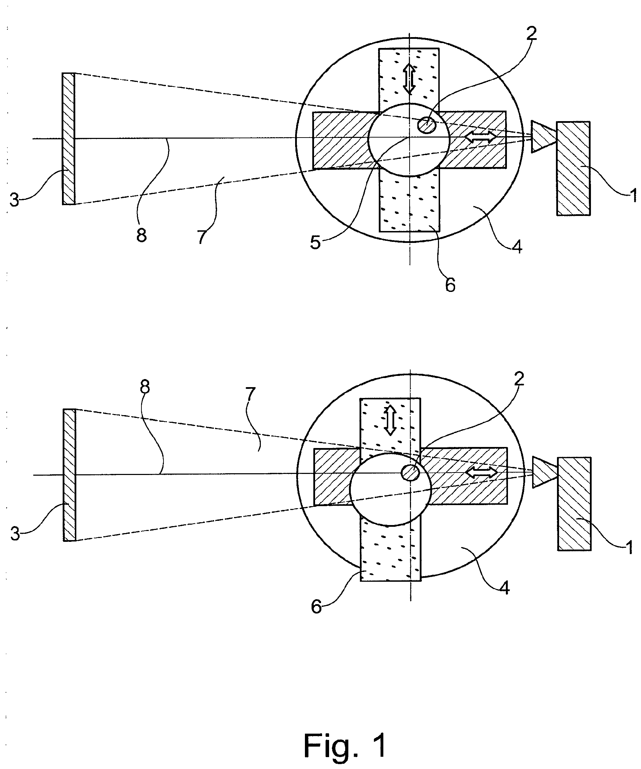

Die Figur 1 zeigt ein aus dem Stand der Technik bekanntes Vorgehen. Ein Prüfobjekt 2 ist in einem Röntgenprüfsystem angeordnet. Das Röntgenprüfsystem umfasst eine Röntgenquelle 1 und einen Detektor 3. Zwischen diesen ist ein Rotationstisch 4 mit einer senkrecht zur Blattebene verlaufenden Rotationsachse 5, die der Z-Achse entspricht, angeordnet. Auf dem Rotationstisch 4 ist ein Positionstisch 6 angebracht, der eine Verschiebung des Prüfobjekts, das auf ihm angeordnet ist, in der Blattebene, der XY-Ebene, ermöglicht. Die X-Achse ist parallel zur Oberfläche des Detektors 3 und verläuft in Figur 1 vertikal in der Blattebene. Daraus ergibt sich, dass die Y-Achse horizontal in der Blattebene verläuft. Die Röntgenröhre 1 emittiert einen Fächerstrahl 7, dessen Zentralstrahl 8 den Detektor 3 mittig trifft. Der Zentralstrahl 8 entspricht der Y-Achse.

Das Prüfobjekt 2 ist nicht mittig über dem Rotationstisch 4 angeordnet, also außerhalb dessen Rotationsachse 5. Um ein möglichst gutes Bild des Prüfobjekts 2 zu erhalten muss dieses jedoch im Zentrum der Drehbewegung angeordnet sein. Somit wird das am Positionstisch 6 angeordnete Prüfobjekt mittels des Positionstischs 6 so lange in X- und Y-Richtung verschoben, bis es über der Rotationsachse 5 des Rotationstischs 4 liegt (siehe unteren Teil der Figur 1). Jetzt wird die Rotation des Prüfobjekts 2 durch Rotation des Rotationstischs 4 um seine Rotationsachse 5 durchgeführt und der Zentralstrahl 8 geht in jeder Drehlage des Prüfobjekts 2 durch diesen hindurch. Diese beschriebene klassische CT-Aufnahmeverfahren sieht vor, dass das Prüfobjekt 2 im Fächerstrahl 7 rotiert wird, um so die einzelnen Projektionen zu erhalten, welche durch geeignete Software in ein Tomogramm gewandelt werden. Bei der Rotation des Prüfobjektes 2 ist dabei für die Qualität entscheidend, dass das Prüfobjekt 2 in jeder Projektion komplett dargestellt wird. Gerade im Bereich sehr großer Vergrößerungen ist es sehr aufwendig, den interessierenden Bereich in das Rotationszentrum, also über die Rotationsachse 5 des Rotationstischs 4 zu verlagern.

Der im Folgenden beschriebene Lösungsansatz wir anhand von Beispielen aus DR und CT anschaulich gemacht, kann aber auf gleiche Weise im Bereich der Laminographie eingesetzt werden. Er stellt eine universelle Lösung dar und kann in vielen Bereichen einer Röntgenprüfanlage zum Einsatz kommen.

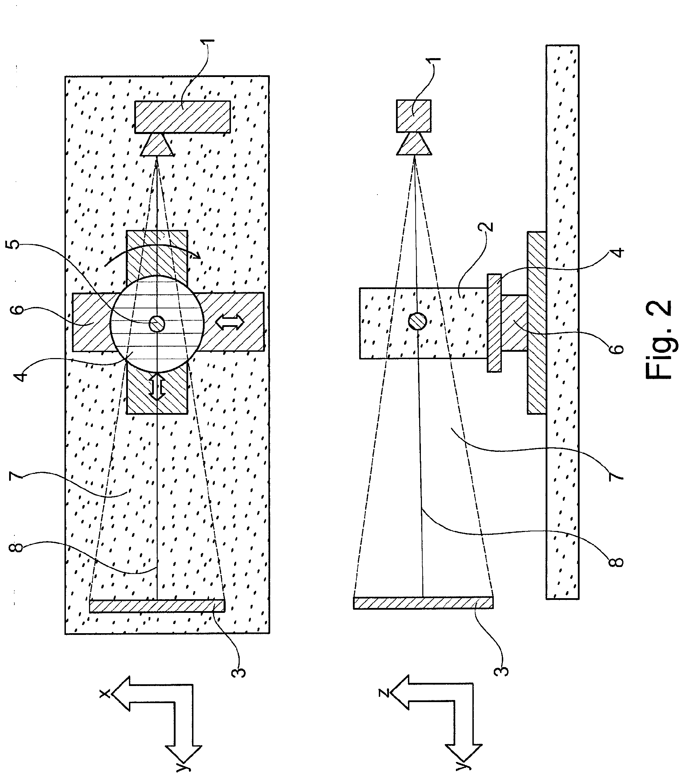

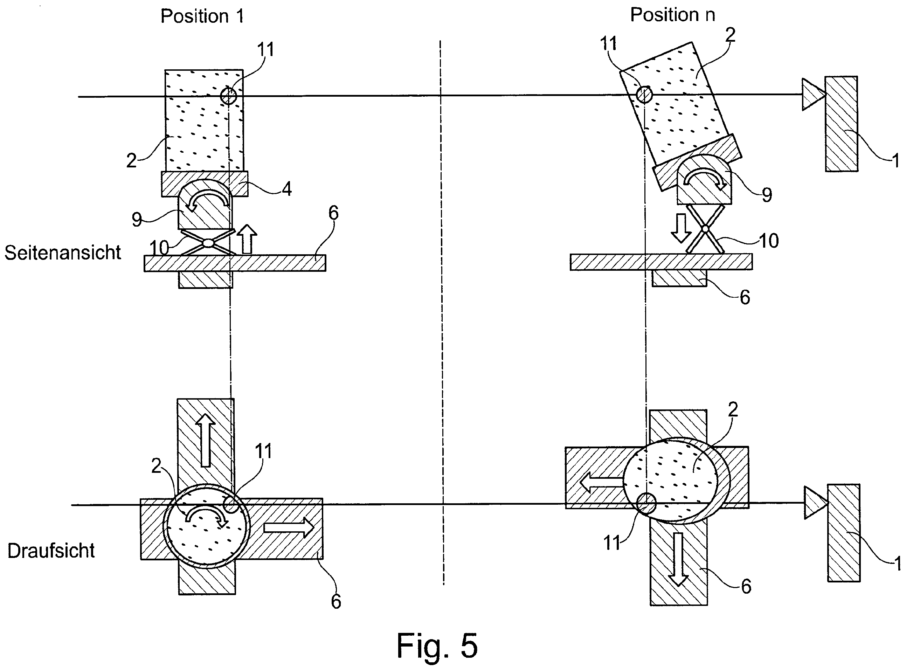

In Figur 2 ist ein Röntgenprüfsystem zur Durchführung eines erfindungsgemäßen Verfahrens dargestellt. Es entspricht in weiten Teilen dem oben zu Figur 1 beschriebenen Röntgenprüfsystem. Im Unterschied dazu ist der Rotationstisch 4 auf dem Positionstisch 6 angeordnet und nicht anders herum, wie zu Figur 1 beschrieben. Darüber hinaus weist das erfindungsgemäße Röntgenprüfsystem noch eine Hubvorrichtung 10 und eine Kippachse 9 auf (siehe Figur 5).

Der erfindungsgemäße Lösungsansatz ist es, Achsen so miteinander in Beziehung zu setzen, dass deren gemeinsame Positionierung den Verfahrweg einer neuen - virtuellen - Achse darstellt. Zum besseren Verständnis wird das Verfahren anhand einer "virtuelle Rotationsachse" einer CT-Röntgenmaschine dargestellt.

Davon ausgehend, dass der Rotationstisch 4 auf einem Positionstisch 6 - mit linearen Bewegungsmöglichkeiten in der XY-Ebene - befestigt ist, ist es nun möglich mit der X-Achse und der Y-Achse kombiniert zu verfahren, so dass sich der Rotationstisch 4 auf einer Kreisbahn bewegt.

Um eine virtuelle Rotationsachse zu realisieren, ist es nun erforderlich, dass der Rotationswinkel des Rotationstischs 4 im definierten Verhältnis zu den X- und Y-Achsen positioniert bzw. bewegt wird. Hierzu wird die Rotationsachse 5 als Master definiert und die beiden Achsen X und Y entsprechend des Rotationswinkels der Rotationsachse 5 positioniert. Die Beziehungen hierzu lauten erfindungsgemäß:

$$X = R \times \cos(\varphi - \varphi_0) + X_0$$

$$Y = R \times \sin(\varphi - \varphi_0) + Y_0$$

mit

X:    neuer Sollwert entlang der X-Achse,
$X_0$:    Startwert der X-Achse zum Startzeitpunkt der virtuellen Achskopplung,
Y:    neuer Sollwert entlang der Y-Achse,
$Y_0$:    Startwert der Y-Achse zum Startzeitpunkt der virtuellen Achskopplung,
R:    Abstand zwischen der Rotationsachse und der neuen virtuellen Rotationsachse,
$\varphi$:    aktueller Rotationswinkel des Rotationstisches und
$\varphi_0$:    Startwert des Rotationswinkels zum Startzeitpunkt der virtuellen Achskopplung.

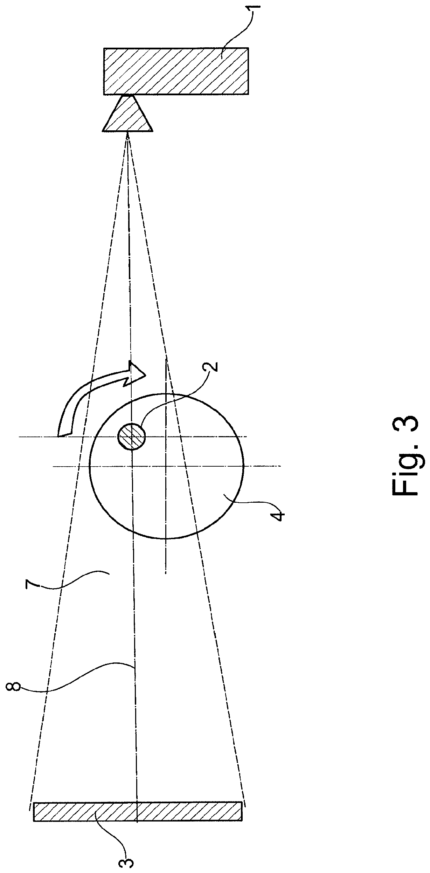

Diese Art der Verknüpfung ermöglicht es nun, um jeden beliebigen Punkt in der XY-Ebene zu rotieren, sofern die absoluten Verfahrwegsgrenzen der X- bzw. Y-Achse nicht überschritten werden, wie dies in Figur 3 schematisch dargestellt ist.

Die daraus resultierende neue, virtuelle Rotationsachse verhält sich für weitere Prüfverfahren wie eine reelle Rotationsachse, d.h. dass die bei der Röntgenprüfung eingesetzten Verfahren wie beispielsweise eine Messbereichserweiterung (DR) oder ein CT-Prüfverfahren (Helix-CT, etc.) weiterhin ohne Einschränkung verwendet werden können.

Alternativ zu der gerade beschriebenen Anordnungen können anstatt des Rotationstisches 4 auch die bildgebenden Elemente Detektor 3 und Röntgenquelle 1 um das Prüfobjekt 2 rotieren bzw. in XY-Richtung bewegt werden.

Die Übertragung des Verfahrens der virtuellen Rotationsachse lässt sich leicht in abgewandelter Form als Verfahren eines Betrachtungswinkels mit beliebigem Kipppunkt umsetzen. Vorteil dabei ist ein fester Fokus-Objekt-Abstand entlang der Manipulation der X-Achse.

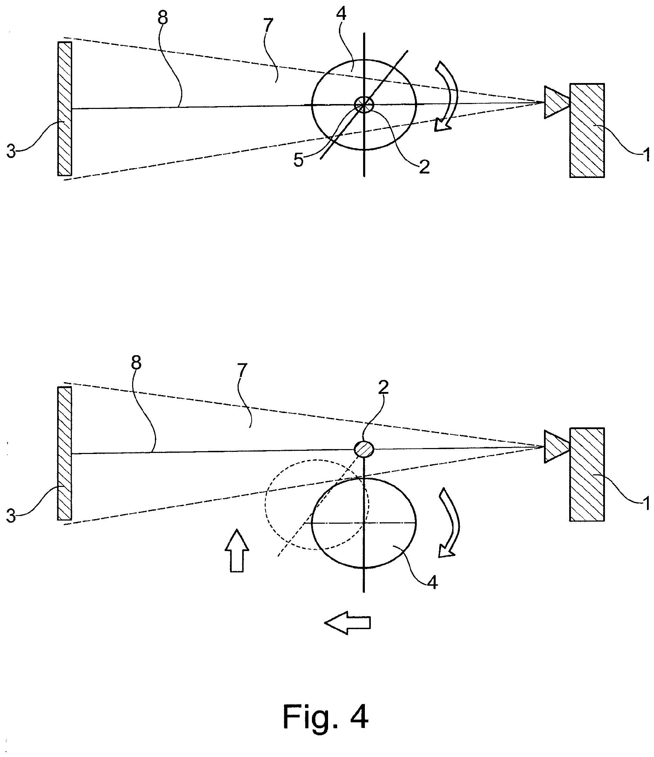

Die Figur 4 (Darstellung in der XY-Ebene) zeigt im oberen Teil den Standardfall, d.h. der Bereich um einen interessierenden Punkt im Prüfobjekt 2 wird unter verschiedenen Betrachtungswinkeln untersucht. Hierfür muss sich dieser Punkt in der Rotationsachse 5 des Rotationstisches 4 befinden. Nun kann man mittels des Rotationstisches 4 den interessierenden Punkt unter verschiedenen Betrachtungswinkeln anschauen. Wichtig dabei ist, dass der interessierende Punkt sich in der Rotationsachse 5 des Rotationstisches 4 befindet. Sollte dies nicht der Fall sein, so würde der Bereich um den interessierenden Punkt bei großer Vergrößerung aus dem Sichtfeld des Detektors 3 wandern.

Die untere Darstellung der Figur 4 zeigt die Möglichkeit, um jeden Punkt auf der X-Achse zu kippen. Durch die Überlagerung der Rotationsachse 5 mit der X- und Y-Achse besteht die Möglichkeit, den interessierenden Punkt auch dann zu untersuchen, wenn dieser sich nicht im Rotationszentrum der Rotationstisches 4 befindet. Hierzu bedient man sich der gleichen Verfahren wie oben beschrieben wurde. Bei der vorliegenden Darstellung wird der interessierende Punkt im Zentralstrahl 8 positioniert. Aus dieser Position und der reellen Achsposition des Rotationstisches 4 kann man den Wert R (siehe oben) ermitteln und eine virtuelle Rotationsachse "einschalten". Damit lässt sich der interessierende Punkt unter beliebigen Betrachtungswinkeln untersuchen. Sobald man also einen neuen Rotationswinkel einstellt, werden die X- bzw. Y-Achsen automatischen nach dem zuvor beschriebenen mathematischen Zusammenhang positioniert.

Durch eine zusätzliche Bewegungsmöglichkeit des Prüfobjektes 2 in Z-Richtung (bezogen auf den Detektor 3) kann damit bei einem planaren Prüfobjekt 2 in jedem beliebigen Punkt um eine auf der YZ-Ebene senkrecht stehende Achse gekippt werden. Dies wird anhand Figur 5 erläutert.

Durch eine zusätzliche Kippachse 9 des Rotationstisches 4 (alternativ geht dies auch mit einer Kippbewegung der Detektor-Strahlungsgeometrie) wird in Verbindung mit einer Hubvorrichtung 10, die den Rotationstisch 4 entlang der Z-Achse bewegt, die Möglichkeit geschaffen, bei einem Prüfobjekt 2 an einem beliebigen Punkt, der als interessierender Bereich 11 dargestellt ist, um eine Achse in beliebiger Lage zu kippen. Davon ausgehend, dass auf der Mitte des Rotationstisches 4 eine flache, rechteckige Probe als Prüfobjekt 2 montiert ist, ist es durch die oben beschriebenen Verfahren möglich, entlang der X-Achse und in Verbindung mit einer Z-Achse jeden Punkt der Probe um die Z-Achse zu rotieren. Mit der zusätzlichen Kippachse 9 entsteht eine weitere Rotationsachse nun aber in X-Richtung, d.h. es ist nun zusätzlich möglich, auch jeden Punkt um die X-Achse zu rotieren. Damit hat man den maximalen Freiheitsgrad, um die Untersuchung in einem interessierenden Bereich 11 um einen Punkt in der Probe mit allen Betrachtungswinkeln um X und Z durchzuführen.

Die Orientierung des Koordinatensystems ist prinzipiell beliebig.

Bezugszeichenliste

1 Röntgenquelle
2 Prüfobjekt
3 Detektor
4 Rotationstisch
5 Rotationsachse
6 Positionstisch
7 Fächerstrahl
8 Zentralstrahl
9 Kippachse
10 Hubvorrichtung
11 interessierender Bereich

**Patentansprüche**

1. Verfahren zur Rotation eines Prüfobjekts (2) um eine beliebige virtuelle Rotationsachse in der XY-Ebene in einem Röntgenprüfsystem mit einer Röntgenquelle (1), einem Zentralstrahl (8), der parallel zur Y-Achse verläuft, einem Detektor (3) und einem dazwischen angeordneten Rotationstisch (4), dessen Rotationsachse (5) die Z-Achse bildet, wobei der Rotationstisch (4) auf einem Positionstisch (6) angeordnet ist, wobei der Positionstisch (6) parallel zur XY-Ebene zwischen Röntgenquelle (1) und Detektor (3) bewegbar ist, umfassend die Schritte:

- Festlegen des Prüfobjekts (2) auf dem Rotationstisch (4),
- Realisieren der Rotation des Prüfobjekts (2) um die virtuelle Rotationsachse durch rotieren des Rotationstischs (4) um die Rotationsachse (5) und durch kombiniertes Verfahren des Positionstischs (6) entlang der X-Achse und Y-Achse, so dass sich der Rotationstisch (4) auf einer Kreisbahn bewegt,
- wobei das Verfahren des Positionstischs (6) entlang der X- und Y-Achse entsprechend dem Rotationswinkel φ der Rotationsachse (5) des Rotationstischs (4) erfolgt,
- wobei der Rotationswinkel φ des Rotationstischs (4) zu den X- und Y-Positionen des Positionstischs (6) folgende Beziehungen hat:

$$X = R \times \cos(\varphi - \varphi_0) + X_0$$

$$Y = R \times \sin(\varphi - \varphi_0) + Y_0$$

mit

X: neuer Sollwert entlang der X-Achse,
$X_0$: Startwert der X-Achse zum Startzeitpunkt der virtuellen Achskopplung,
Y: neuer Sollwert entlang der Y-Achse,
$Y_0$: Startwert der Y-Achse zum Startzeitpunkt der virtuellen Achskopplung,
R: Abstand zwischen der Rotationsachse (5) und der neuen virtuellen Rotationsachse,
φ: aktueller Rotationswinkel der Rotationstisches (4) und
$\varphi_0$: Startwert des Rotationswinkels des Rotationstisches (4) zum Startzeitpunkt der virtuellen Achskopplung.

2. Verfahren zur Rotation eines Prüfobjekts (2) um eine beliebige virtuelle Rotationsachse in der XY-Ebene in einem Röntgenprüfsystem mit einer Röntgenquelle (1), einem Zentralstrahl (8), einem Detektor (3) und einem dazwischen angeordneten Rotationstisch (4), dessen Rotationsachse (5) die Z-Achse bildet, wobei der Rotationstisch (4) auf einem Positionstisch (6) angeordnet ist, wobei die Röntgenquelle (1) und der Detektor (3) in der XY-Ebene rotieren können und parallel zur XY-Ebene bewegbar sind, umfassend folgende Schritte:

- Festlegen des Prüfobjekts (2) auf dem Rotationstisch (4),
- Rotation der Röntgenquelle (1) in Verbindung mit dem Detektor (3) um die virtuelle Rotationsachse um das Prüfobjekt (2), dadurch dass diese Rotation durch eine Drehung der Röntgenquelle (1) in Verbindung mit dem Detektor (3) um eine zur Z-Achse parallele Drehachse und gleichzeitig ein Verfahren der Röntgenquelle (1) und des Detektors (3) parallel zur XY-Ebene erfolgt,
- wobei der Rotationswinkel φ der Röntgenquelle (1) zu den X- und Y-Positionen der Röntgenquelle (1) folgende Beziehungen hat:

$$X = R \times \cos(\varphi - \varphi_0) + X_0$$

$$Y = -R \times \sin(\varphi - \varphi_0) + Y_0$$

mit

X: neuer Sollwert entlang der X-Achse,
$X_0$: Startwert der X-Achse zum Startzeitpunkt der virtuellen Achskopplung,
Y: neuer Sollwert entlang der Y-Achse,
$Y_0$: Startwert der Y-Achse zum Startzeitpunkt der virtuellen Achskopplung,
R: Abstand zwischen der zur Z-Achse parallelen Drehachse der Röntgenquelle (1) und der neuen virtuellen Rotationsachse,
φ: aktueller Rotationswinkel der Röntgenquelle (1) und
$\varphi_0$: Startwert des Rotationswinkels der Röntgenquelle (1) zum Startzeitpunkt der virtuellen Achskopplung.

3. Verfahren nach Patentanspruch 2, wobei die Röntgenquelle (1) des Röntgenprüfsystems in Verbindung mit dem Detektor (3) um den Rotationstisch (4) drehbar ist und/oder parallel zur Z-Achse bewegbar ist und/oder um eine parallel zur XY-Ebene, insbesondere parallel zur X-Achse, verlaufende Kippachse (9) kippbar ist.

4. Verfahren nach einem der vorstehenden Patentansprüche, wobei der Rotationstisch (4) des Röntgenprüfsystems entlang der Z-Achse bewegbar ist.

5. Verfahren nach einem der vorstehenden Patentansprüche, wobei der Rotationstisch (4) des Röntgenprüfsystems um eine parallel zur XY-Ebene, insbesondere parallel zur X-Achse, verlaufende Kippachse (9) kippbar ist.

6. Verfahren nach einem der vorstehenden Patentansprüche, wobei vor der Durchführung der beschriebenen Bewegungen der Rotationstisch (4) in Z-Richtung bewegt wird und um eine parallel zur X-Richtung verlaufende Kippachse (9) gekippt wird, so dass ein innerhalb des Prüfobjekts (2) liegender interessierender Bereich (11) vor und nach der beschriebenen Kipp- und Translationsbewegung an derselben Stelle im Koordinatensystem liegt.

**Claims**

1. Method for rotating a test object (2) about any desired virtual axis of rotation in the XY plane in an X-ray inspection system with an X-ray source (1), a central beam (8), which runs parallel to the Y axis, a detector (3) and a rotary table (4) arranged in between, the axis of rotation (5) of which forms the Z axis, wherein the rotary table (4) is arranged on a positioning table (6), wherein the positioning table (6) is movable parallel to the XY plane between the X-ray source (1) and the detector (3), comprising the steps:

- fixing the test object (2) on the rotary table (4),
- performing the rotation of the test object (2) about the virtual axis of rotation by rotating the rotary table (4) about the axis of rotation (5) and by combined displacement of the positioning table (6) along the X axis and Y axis, with the result that the rotary table (4) moves on a circular path,
- wherein the displacement of the positioning table (6) along the X and Y axis is effected corresponding to the angle of rotation φ of the axis of rotation (5) of the rotary table (4),
- wherein the angle of rotation φ of the rotary table (4) has the following relationships to the X and Y positions of the positioning table (6):

$$X = R \times \cos(\varphi - \varphi_0) + X_0$$

$$Y = R \times \sin(\varphi - \varphi_0) + Y_0$$

where

X: new target value along the X axis,
$X_0$: starting value of the X axis at the starting time of the virtual axis coupling,
Y: new target value along the Y axis,
$Y_0$: starting value of the Y axis at the starting time of the virtual axis coupling,
R: distance between the axis of rotation (5) and the new virtual axis of rotation,
φ: current angle of rotation of the rotary table (4) and
$\varphi_0$: starting value of the angle of rotation of the rotary table (4) at the starting time of the virtual axis coupling.

2. Method for rotating a test object (2) about any desired virtual axis of rotation in the XY plane in an X-ray inspection system with an X-ray source (1), a central beam (8), a detector (3) and a rotary table (4) arranged in between, the axis of rotation (5) of which forms the Z axis, wherein the rotary table (4) is arranged on a positioning table (6), wherein the X-ray source (1) and the detector (3) can rotate in the XY plane and are movable parallel to the XY plane, comprising the following steps:

- fixing the test object (2) on the rotary table (4),
- rotating the X-ray source (1) in conjunction with the detector (3) about the virtual axis of rotation around the test object (2), in that this rotation is effected by a rotation of the X-ray source (1) in conjunction with the detector (3) about an axis of rotation parallel to the Z axis and at the same time a displacement of the X-ray source (1) and the detector (3) parallel to the XY plane,
- wherein the angle of rotation φ of the X-ray source (1) has the following relationships to the X and Y positions of the X-ray source (1):

$$X = R \times \cos(\varphi - \varphi_0) + X_0$$

$$Y = -R \times \sin(\varphi - \varphi_0) + Y_0$$

where

X: new target value along the X axis,
$X_0$: starting value of the X axis at the starting time of the virtual axis coupling,
Y: new target value along the Y axis,
$Y_0$: starting value of the Y axis at the starting time of the virtual axis coupling,
R: distance between the axis of rotation of the X-ray source (1) parallel to the Z axis and the new virtual axis of rotation,
φ: current angle of rotation of the X-ray source (1) and
$\varphi_0$: starting value of the angle of rotation of the X-ray source (1) at the starting time of the virtual axis coupling.

3. Method according to claim 2, wherein the X-ray source (1) of the X-ray inspection system in conjunction with the detector (3) is rotatable around the rotary table (4) and/or is movable parallel to the Z axis and/or is tiltable about a tilting axis (9) running parallel to the XY plane, in particular parallel to the X axis.

4. Method according to one of the preceding claims, wherein the rotary table (4) of the X-ray inspection system is movable along the Z axis.

5. Method according to one of the preceding claims, wherein the rotary table (4) of the X-ray inspection system is tiltable about a tilting axis (9) running parallel to the XY plane, in particular parallel to the X axis.

6. Method according to one of the preceding claims, wherein, before the described movements are carried out, the rotary table (4) is moved in the Z direction and is tilted about a tilting axis (9) running parallel to the X direction, with the result that a region of interest (11) lying inside the test object (2) lies in the same place in the coordinate system before and after the described tilting and translational movement.

## Revendications

1. Procédé de rotation d'un objet à contrôler (2) autour d'un axe de rotation virtuel quelconque dans le plan XY dans un système de contrôle à rayons X à l'aide d'une source de rayons X (1), d'un rayon central (8) s'étendant parallèlement à l'axe Y, d'un détecteur (3) et d'une table rotative (4) intercalée dont l'axe de rotation (5) forme l'axe Z, dans lequel la table rotative (4) est disposée sur une table de positionnement (6), dans lequel la table de positionnement (6) est mobile parallèlement au plan XY entre la source de rayons X (1) et le détecteur (3), comprenant les étapes suivantes :

   - la fixation de l'objet à contrôler (2) sur la table rotative (4) ;
   - la réalisation de la rotation de l'objet à contrôler (2) autour de l'axe de rotation virtuel par un déplacement combiné de la table de positionnement (6) le long de l'axe X et de l'axe Y, de sorte que la table rotative (4) se déplace sur une orbite ;
   - dans lequel le déplacement de la table de positionnement (6) s'effectue le long de l'axe X et Y suivant l'angle de rotation $\varphi$ de l'axe de rotation (5) de la table rotative (4) ;
   - dans lequel les angles de rotation $\varphi$ de la table rotative (4) par rapport aux positions X et Y de la table de positionnement (6) répondent aux relations suivantes :

$$X = R \times \cos(\varphi - \varphi_0) + X_0$$

$$Y = R \times \sin(\varphi - \varphi_0) + Y_0$$

avec :

   X : nouvelle valeur théorique le long de l'axe X ;
   $X_0$ : valeur initiale de l'axe X au moment initial du couplage axial virtuel ;
   Y : nouvelle valeur théorique le long de l'axe Y ;
   $Y_0$ : valeur initiale de l'axe Y au moment initial du couplage axial virtuel ;
   R : distance entre l'axe de rotation (5) et le nouvel axe de rotation virtuel ;
   $\varphi$ : angle de rotation actuel de la table rotative (4) ; et
   $\varphi_0$ : valeur initiale de l'angle de rotation de la table rotative (4) au moment initial du couplage axial virtuel.

2. Procédé de rotation d'un objet à contrôler (2) autour d'un axe de rotation virtuel quelconque dans le plan XY dans un système de contrôle à rayons X à l'aide d'une source de rayons X (1), d'un rayon central (8) s'étendant parallèlement à l'axe Y, d'un détecteur (3) et d'une table rotative (4) intercalée dont l'axe de rotation (5) forme l'axe Z, dans lequel la table rotative (4) est disposée sur une table de positionnement (6), dans lequel la source de rayons X (1) et le détecteur (3) sont mobiles parallèlement à l'axe Z et parallèlement au plan XY ;
comprenant les étapes suivantes :

   - la fixation de l'objet à contrôler (2) sur la table rotative (4) ;
   - la rotation de la source de rayons X (1) en lien avec le détecteur (3) autour de l'axe de rotation virtuel évoluant autour de l'objet à contrôler (2), **caractérisé en ce que** ladite rotation se produit par rotation de la source de rayons X (1) en lien avec le détecteur (3) autour d'un axe de rotation parallèle à l'axe Z et simultanément un déplacement de la source de rayons X (1) et du détecteur (3) parallèlement au plan XY ;
   - dans lequel les angles de rotation $\varphi$ de la table rotative (4) par rapport aux positions X et Y de la table de positionnement (6) répondent aux relations suivantes :

$$X = R \times \cos(\varphi - \varphi_0) + X_0$$

$$Y = R \times \sin(\varphi - \varphi_0) + Y_0$$

avec :

   X : nouvelle valeur théorique le long de l'axe X ;
   $X_0$ : valeur initiale de l'axe X au moment initial du couplage axial virtuel ;
   Y : nouvelle valeur théorique le long de l'axe Y ;
   $Y_0$ : valeur initiale de l'axe Y au moment initial du couplage axial virtuel ;
   R : distance entre l'axe de rotation (5) et le nouvel axe de rotation virtuel ;
   $\varphi$ : angle de rotation actuel de la table rotative (4) ; et
   $\varphi_0$ : valeur initiale de l'angle de rotation de la table rotative (4) au moment initial du couplage axial virtuel.

3. Procédé selon la revendication 2, dans lequel la source de rayons X (1) du système de contrôle à rayons X peut être pivotée, en lien avec le détecteur (3), autour de la table rotative (4) et/ou être déplacée parallèlement au plan XY par rapport à la table rotative (4) et/ou être déplacée parallèlement à l'axe Z et/ou être pivotée autour d'un axe de pivotement (9) s'étendant parallèlement au plan XY, notamment parallèlement à l'axe X.

4. Procédé selon l'une quelconque des revendications précédentes, dans lequel la table rotative (4) du système de contrôle à rayons X peut être déplacée le long de l'axe Z.

5. Procédé selon l'une quelconque des revendications précédentes, dans lequel la table rotative (4) du système de contrôle à rayons X peut pivoter autour d'un axe de pivotement (9) s'étendant parallèlement au plan XY, notamment parallèlement à l'axe X.

6. Procédé selon l'une quelconque des revendications précédentes, dans lequel avant de réaliser les mouvements décrits, la table rotative (4) est déplacée dans la direction Z et pivotée autour d'un axe de pivotement (9) s'étendant parallèlement à la direction X, de sorte qu'une zone (11) d'intérêt située à l'intérieur de l'objet à contrôler (2) se trouve au même point, avant et après le mouvement de pivotement et de translation, dans le système de coordonnées.

Fig. 1

Fig. 2

Fig. 3

# Fig. 4

Position 1

Position n

Seitenansicht

Draufsicht

Fig. 5

EP 3 060 903 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- AT 363262
- GB 2274964 A